# NEUE EUROPÄISCHE PATENTSCHRIFT

(11) **EP 0 407 948 B2**
(45) Veröffentlichungstag und Bekanntmachung des Hinweises auf die Entscheidung über den Einspruch: **04.10.2001**
(45) Hinweis auf die Patenterteilung: 06.09.1995
(21) Anmeldenummer: 90113107.8
(22) Anmeldetag: 09.07.1990
(51) Int. Cl.: G01F 1/06, G01F 1/08

(54) **Flügelradzähler zum Messen einer Flüssigkeitsmenge**
Turbine flowmeter for measuring fluid quantities
Compteur de liquide à turbine pour mesurer un débit

(30) Priorität: 13.07.1989 DE 3923142
(43) Veröffentlichungstag der Anmeldung: 16.01.1991
(73) Patentinhaber: Asea Brown Boveri Aktiengesellschaft, 68309 Mannheim (DE)
(72) Erfinder: Obst, Hans-Christian, D-6802 Ladenburg (DE); Rogers, Ivor Thomas, Stopsley Luton, Bedfordshire (GB)
(74) Vertreter: Miller, Toivo

(56) Entgegenhaltungen:
- CH-A- 371 269
- DE-A- 1 473 148
- DE-B- 2 647 297
- DE-C- 930 351
- FR-A- 760 336
- NL-A- 6 913 631
- PATENT ABSTRACTS OF JAPAN vol. 7, no. 172 (P-213)(1317) 29 Juli 1983,& JP-A-58 77619

## Beschreibung

Die Erfindung betrifft einen Flügelradzähler der im Oberbegriff des Anspruchs 1 genannten Art.

Aus der DE-PS 26 47 297 ist ein Mehrstrahl-Flügelradzähler bekannt, bei dem es gelingt, durch eine bestimmte Anordnung und Ausbildung der Einlaß- und Auslaßkanäle eine besonders hohe Durchlaßfähigkeit zu erreichen ohne daß hierdurch die Ansprechempfindlichkeit des Flügelradzählers sinkt oder sich die mit ihm erzielbare Meßgenauigkeit vermindert. Die zur Ermittlung der Durchflußmenge einer Flüssigkeit, insbesondere von Wasser eingesetzten Flügelradzähler erlauben eine mittelbare Volumenmessung, da die Durchflußmenge in eine der Durchflußgeschwindigkeit proportionale Drehzahl umgesetzt werden muß, und aufgrund der erzielten Umdrehungen des Flügelrades auf die Durchflußmenge geschlossen werden kann.

Es liegt auf der Hand, daß bei der Umformung der Meßgröße "Durchflußmenge" in eine "Umdrehungszahl" Meßfehler auftreten, die bei einem mechanischen Umformer dieser Art zum Teil systemimmanent sind. Auch der aus der DE-PS 26 47 297 bekannte verbesserte Wasserzähler zeigt eine für Flügelradzähler charakteristische Fehlerkurve. Der typische Verlauf dieser Fehlerkurve hat dazu geführt, daß man den Meßbereich in einen unteren und einen oberen Meßbereich unterteilt. Während die Fehlerkurve im oberen Meßbereich nur eine geringe Abweichung von 0 aufweist, die Meßkurve also entsprechend linear verläuft, erreicht die Fehlerkurve im unteren Meßbereich mit sinkender Durchflußmenge zunächst eine starke Überhöhung, die dann steil zu negativen Werten hin abfällt. Unterhalb der unteren Meßbereichsgrenze und damit außerhalb des Meßbereichs zu 0 hin verbleibt ein schmaler Bereich, in dem besonders große Fehler durch Reibungsverluste auftreten.

Bei der Eichung von Flügelradzählern wird dem typischen Verlauf der Fehlerkurve Rechnung getragen, indem man bei Zählern im oberen Meßbereich einen Fehler von +/-2 % zuläßt und dieser Fehler nach der Trenngrenze im unteren Meßbereich auf +/- 5 % ansteigen darf. Die typische Fehlerkurve mit Toleranzbereich ist z.B. In einem Aufsatz von Beyer in "Wasser, Abwasser" 128 (1987), Heft 3, Seite 166 dargestellt.

Aus der deutschen Patentschrift Nr 930 351 ist eine Drosselvorrichtung für Meßradzähler bekannt. Dort ist zur Begrenzung der Meßfühler im unteren Durchflußbereich eine Strahablenkung vorgesehen. Dazu ist der dem Meßrad vorgeschalteter Drosselquerschnitt zu einem Teil von einander gegenüberstehenden Profilen mit entgegensetzt verschiedenem Einfluß auf den Ausflußbeiwert begrenzt , während der Rest aus in sich einheitlich berandeten Teilen besteht, die aber entgegengesetzt verschiedene Außflußcharakteristik haben.

Die Problematik der starken Überhöhung der Fehlerkurve im unteren Meßbereich ist auch aus der DE-A1 473 148 bekannt, in der zur Linearisierung vorgeschlagen wird, die Einströmkänale nach unten offen zu gestalten oder erst bei der Einmündung in den Meßraum bzw. kurz vorher auf den das Drehzahlverhalten des Flügelrades bestimmenden Einströmquerschnitt einzuengen. Mit der vorgeschlagenen Einengung wird nur eine Verwirbelung im unteren Meßbereich erreicht. Ein Beaufschlagen der Paletten des Flügelrades in unterschiedlichen radialen Abständen zur Drehachse durch entsprechend umgeleitete Teilströme wird weder angestrebt, noch bei einem seitlich im Mantel eines Flügelradbechers angeordneten, geschlossenen Einlaßkanal erreicht.

Weiterhin ist noch aus der FR-A-760 336 ein Flügelradwasserzähler bekannt, bei dem Einlaßkanäle sowohl von unten als auch von der Mantelseite des Zählergehäuses durch ihre schräge Anordnung die Paletten seitlich beaufschlagen. Ein aus der EP-A-174 552 bekannter Einstrahl-Flügelradzähler besitzt einen Einlaßkanal, der unmittelbar vor dem Flügelrad in mehrere, über den Querschnitt verteilt angeordnete Kanäle aufgeteilt ist, deren Länge größer als ihr Durchmesser ist.

Aufgabe der Erfindung ist es, einen Flügelradzähler entsprechend dem Oberbegriff des Anspruchs 1 zu schaffen, dessen Fehler insbesondere im unteren Meßbereich stark reduziert ist, und zwar möglichst soweit, daß im gesamten Meßbereich die für den oberen Meßbereich vorgegebene Fehlertoleranz eingehalten wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Bei der erfindungsgemäßen Lösung wurde von der Überlegung ausgegangen, daß die von der Durchflußmenge abhängige Drehgeschwindigkeit des Flügelrades durch das Geschwindigkeitsprofil der auf die einzelnen Paletten auftreffenden Teilströme bestimmt wird. Bei einer turbulenten Strömung, wie sie vorzugsweise im oberen Meßbereich auftritt, wird das Geschwindigkeitsprofil, das sich entlang der Paletten des Flügelrades aufbaut, keine größeren Überhöhungen an bestimmten Stellen aufweisen. Man kann somit davon ausgehen, daß die am Flügel angreifenden Teilkräfte und das durch sie entsprechend ihrem Abstand zur Drehachse erzeugte Teildrehmoment bei Turbulenz im Flüssigkeitsstrom keine große Abhängigkeit von der jeweiligen Durchflußgeschwindigkeit zeigt.

Da jedoch im Bereich der Trenngrenze, also im Übergang vom oberen zum unteren Meßbereich, die im wesentlichen turbulente Strömung in eine im wesentlichen laminare Strömung wechselt, ist das Geschwindigkeitsprofil im unteren Meßbereich abhängig von der Durchflußmenge bzw. der Durchflußgeschwindigkeit. Man kann somit davon ausgehen, daß sich die an bestimmten Stellen der Paletten auftretenden Teildrehmomente mit der Durchflußgeschwindigkeit ändern, das Geschwindigkeitsprofil also Überhöhungen aufweist, die ggf. auch wechseln.

Erfindungsgemäß wurde deshalb versucht im unteren Meßbereich durch geeignete Maßnahmen Turbulenzen zu erzeugen, die ähnlich wie im oberen Meßbereich für eine Nivellierung des Geschwindigkeitsprofils sorgen und damit Überhöhungen unabhängig davon, an welchem Punkt der Palette sie auftreten, zu vermeiden helfen.

Es ist bereits bekannt im Anströmbereich der Einlaßkanäle durch Anordnung eines Siebes Turbulenzen zu erzeugen, die eine Verringerung der Fehler im unteren Meßbereich bewirken. Diese Siebe sind jedoch zusätzliche Bauteile, die zwingend am Meßeinsatz montiert werden müssen. Weiterhin kann eine Verschmutzung des Siebes das Fehlerverhalten der Meßeinsätze wesentlich beeinflussen, so daß es besonders bei empfindlichen Flügelradzählern für große Durchflußwerte, nach längerem Einsatz durch Ablagerungen zu erheblichen Meßfehlern kommen kann.

Überraschender Weise gelingt es erfindungsgemäß durch Einbringen eines Strömungswandlers unmittelbar in den Einlaßkanal ein Strömungsverhalten zu erzielen, das zu einer Verbesserung des Geschwindigkeitsprofils und damit einer Verminderung des Fehlers im unteren Meßbereich führt. Von wesentlicher Bedeutung ist dabei, daß der Strömungswandler so gestaltet sein kann, daß er keine nennenswerte Behinderung des Durchsatzes verursacht und damit der Flügelradzähler nach wie vor relativ große Durchflußmengen beherrscht. Ein weiterer Vorteil der Erfindung ist, daß der Strömungswandler die äußeren Abmessungen des Meßeinsatzes in keiner Weise beeinflußt und somit keine Schwierigkeiten beim Einbau in alle marktüblichen Gehäuse entstehen. Die Erfindung sieht werterhin vor, den Strömungswandler als eine in den Flüssigkeitsstrom hineinragende Ablenkfläche auszubilden. Durch die besondere Form der Ablenkfläche gelingt es nicht nur im unteren Meßbereich Turbulenzen zu erzeugen, sondern auch eine Ablenkung eines Teils des Flüssigkeitsstroms zur Drehachse hin oder von dieser weg zu erzeugen, je nach dem an welcher der beiden Seiten des Einlaßkanals die Ablenkfläche angeordnet ist. Bei einer Ablenkung eines Teilstroms zur Drehachse hin trifft dieser auf einen Punkt der Palette, an dem er wegen des verminderten Hebelarms eine Verkleinerung des Drehmoments bewirkt und damit einer Überhöhung der Fehlerkurve im unteren Meßbereich entgegenwirkt. Durch eine geeignete Ablenkung des Teilstroms von der Drehachse weg, gelingt es das Drehmoment im Anfangsbereich des unteren Meßbereichs zu erhöhen und damit den steilen Abfall der Fehlerkurve zu vermindern.

Durch Versuche wurde ermittelt, daß ein besonders günstiger Verlauf der Fehlerkurve dann erzielbar ist, wenn die Abrißkante einer Ablenkfläche, die eine Ablenkung zur Drehachse des Flügelrades hin bewirkt, um ca. 30 % der mittleren Kanallänge von der Austrittsöffnung entfernt ist und der Kanalquerschnitt im Bereich der Eintrittsöffnung durch das Zurücksetzen der Seitenwand um ca. 20 % vergrößert ist.

Eine vorteilhafte Weiterbildung des Erfindungsgegenstandes sieht vor, daß mindestens eine sich mit ihrer Breitfläche in Strömungsrichtung erstreckende Trennwand so in den Einlaßkanal eingefügt ist, daß sie mindestens zwei den Flüssigkeitsstrom in Teilströme aufteilende Teileinlaßkanäle bildet. Auch diese Maßnahme führt zu einem günstigeren Geschwindigkeitsprofil entlang der Palette und damit zu einer Verminderung der Fehlerkurve.

Weitere Einzelheiten der Erfindung werden im folgenden näher beschrieben und sind in den Zeichnungen dargestellt.

Es zeigen:
- Fig. 1: einen Schnitt durch einen Flügelradbecher nach Linie I-I der Fig. 2,
- Fig. 2: diesen Flügelradbecher im Schnitt nach Linie II-II der Fig. 1 mit in der linken Hälfte geschnittenen unteren Einlaßkanälen und in der rechten Hälfte geschnittenen oberen Auslaßkanälen,
- Fig. 3: einen Längsschnitt durch den ganzen Flügelradzähler mit in das Zählergehäuse eingesetztem Meßeinsatz.
- Fig. 4: eine Fehlerkurve des Flügelradzählers.

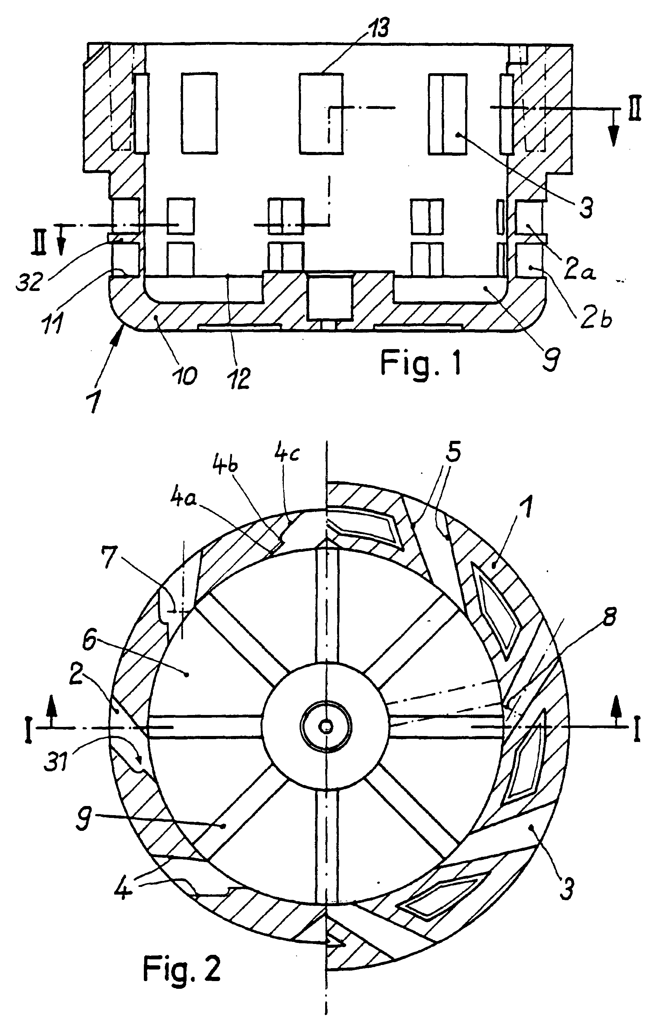

Der in den Figuren 1 und 2 dargestellte, aus Kunststoff bestehende Flügelradbecher 1 ist im unteren Teil seines Mantels mit Einlaßkanälen 2 und im oberen Teil mit Auslaßkanälen 3 versehen. Die Ein- und Auslaßkanäle 2, 3 sind gleichmäßig über den Umfang des Flügelradbechers verteilt, und die Zahl der Auslaßkanäle 3 entspricht der geraden Anzahl der Einlaßkanäle 2. Die acht unteren Einlaßkanäle 2 sind im Querschnitt rechteckig ausgebildet, münden tangential in den Flügelradbecher 1 ein und sind durch entsprechenden Verlauf ihrer beiden Seitenwände 4 geradlinig nach innen verjüngt. Die Verjüngung der Einlaßkanäle 2 beträgt etwa 7° gegenüber einem Parallellauf der beiden Seitenwände. Entsprechend den Einlaßkanälen 2 sind auch die acht oberen Auslaßkanäle 3 in Strömungsrichtung tangential am Flügelradbecher 1 ausgebildet und besitzen den gleichen Rechteckquerschnitt mit ebenfalls um etwa 7° nach innen verjüngend wirkenden Seitenwänden 5. Der senkrecht zur Längsachse der Einlaßkanäle 2 im Bereich der Austrittsöffnung im Flügelraum 6 verbleibende Querschnitt 7 der Einlaßkanäle 2 ist gleich oder kleiner wie der senkrechte Rechteckquerschnitt 8 der Auslaßkanäle 3 auf der Innenseite des Flügelradbechers. Die Anzahl der Staurippen 9 am Boden 10 des Flügelradbechers 1 entspricht der Anzahl der Staurippen auf der Unterseite des aufgesetzen Werkbechers 17 und gleichzeitig der Anzahl der Ein- und Auslaßkanäle 2, 3. Die Unterseite 11 der Einlaßkanäle 2 schließt hierbei in der Höhe mit der Oberkante 12 der Staurippen 9 am Boden 10 des Flügelradbechers 1 ab, kann aber auch höher liegen als diese.

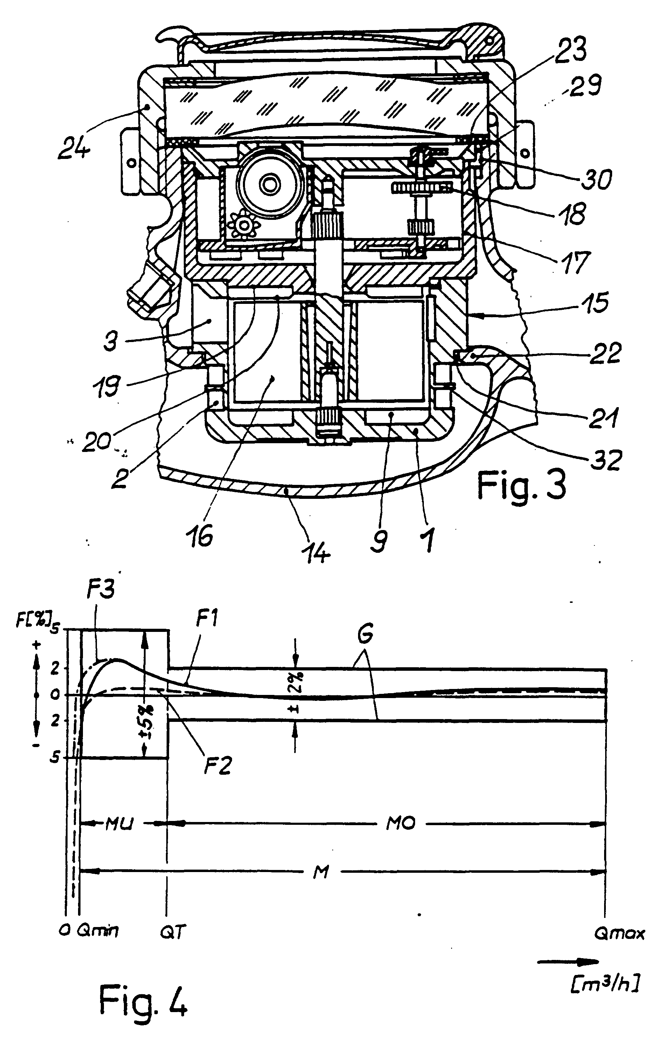

Der in Figur 3 dargestellte Flügelradzähler besitzt ein Zählergehäuse 14, in das der Meßeinsatz 15 eingesetzt ist. Der Meßeinsatz 15 besteht aus dem Flügelradbecher 1 mit dem Flügelrad 16 und dem hierauf aufgesetzten ebenfalls aus Kunststoff gespritzten Werkbecher 17 mit dem hierin eingesetzten Zählwerk 18. Der Werkbecher 17 besitzt unten angespritzte, in den Innenraum 6 des Flügelradbechers 1 hineinragende Staurippen 19. Die Anzahl dieser oberen Staurippen 19 entspricht der Anzahl der Staurippen 9 am Boden 10 des Flügelradbechers 1. Die Oberseite 13 der Auslaßkanäle 3 schließt bei diesem Beispiel wiederum innen in der Höhe mit der Unterkante 20 der oberen Staurippen 19 ab. Der Meßeinsatz 15 ist in den Sitz 21 der Abschlußwand 22 des Zählergehäuses 14 eingesetzt und wird oben über die Kopfdichtung 23 von der Kopfverschraubung 24 gehalten.

Der Meßeinsatz 15 ist als Universal-Meßeinsatz für den Einbau in die verschiedensten Zãhlergehäuse unterschiedlicher Hersteller vorgesehen. Die Abmessungen des Meßeinsatzes 15 entsprechen zweckmäßiger Weise für einen Einsatz als Mehrbereichszähler der Größe 3/5 m³/h den Norminnenmaßen eines Zählers der Nenngröße 3 m³/h und für den Einsatz in einem größeren Zähler bspw. den Norminnenmaßen eines Zählers der Nenngröße 5 m³/h. Für den Einbau dieses Universal-Meßeinsatzes in größere Zählergehäuse wird ein im Querschnitt winkelförmiger Sitzausgleichsring in die Abschlußwand 22 des Zählergehäuses 14 eingesetzt. Weicht das Zählergehäuse 14 auch am Gehäusekopf im Innendurchmesser und in der Höhe erheblich vom Universal-Meßeinsatz 15 ab, so kann zusätzlich zu dem unteren Sitzausgleichsring ein entsprechend angepaßter und im Querschnitt ebenfalls winkelförmiger Kopfausgleichsring auf den Kopf des Meßeinsatzes 15 aufgesteckt werden, der sich dann gegen die Gehäusewandung am Zählerkopf und gegen die Kopfdichtung 23 der Kopfverschraubung 24 legt.

Wie aus Fig. 2 ersichtlich, ist erfindungsgemäß in den Einlaßkanälen 2 ein Strömungswandler 4a, 4b, 4c so ausgebildet, daß sich an mindestens einer der beiden Seitenwände 4 eine Ablenkfläche ergibt. Vom Flügelraum 6 ausgehend verläuft ein erster Teil 4a der Seitenwand 4 geradlinig bis zu einer Abrißkante 4b, hinter der ein zweiter Teil 4c der Seitenwand 4 beginnt, der gegenüber dem ersten Teil 4a parallel verschoben zurückgesetzt ist und durch einen gerundeten Übergang mit diesem verbunden ist. Gemäß dem vorliegenden Beispiel sind bei allen Einlaßkanälen 2 die Strömungswandler 31 jeweils in der Seitenwand 4 ausgebildet, an der über die Rundung vor der Abrißkante 4b eine Ablenkung zur Drehachse hin erzielt wird.

In Fig. 1 erkennt man, daß die Einlaßkanäle 2 durch eine Trennwand 32 halbiert sind, so daß zwei zueinander parallel laufende Teilkanäle entstehen. Auch durch diese Maßnahme wird das auf die Paletten des Flügelrades 16 wirkende Geschwindigkeitsprofil der einströmenden Flüssigkeit verändert. Man kann davon ausgehen, daß durch eine noch weitergehendere Unterteilung eine noch stärkere Nivellierung des Geschwindigkeitsprofils erzielt werden kann, doch wurde aus konstruktiven Gründen, insbesondere auch wegen der zunehmenden Verminderung des freien Querschnittes hiervon Abstand genommen. Versuche haben jedoch ergeben, daß gerade die Kombination einer Unterteilung der Einlaßkanäle 2 und die Anordnung von Strömungswandlern 31 in jedem der Teilkanäle zu einem besonders günstigen Verlauf der Fehlerkurve führt

In Fig. 4 ist der Verlauf einer solchen Fehlerkurve F2 im Vergleich zur üblichen Fehlerkurve F1 dargestellt, der eine starke Reduzierung der üblichen Überhöhung im unteren Meßbereich MU, also im Bereich vorwiegend laminarer Strömung aufweist. Einen Verlauf, wie ihn die dritte Fehlerkurve F3 zeigt, erreicht man durch Anordnung eines Strömungswandlers an einer Seitenwand, die dem im Beispiel dargestellten Strömungswandler 31 gegenüberliegt. Durch eine solche Anordnung des Strömungswandlers wird das Drehmoment im untersten Teil des Meßbereiches M verstärkt, so daß die Fehlerkurve F3 in diesem Bereich eine entsprechende Überhöhung erfährt. Hierdurch wird erreicht, daß Wasserzähler auch bei sehr geringem Wasserverbrauch noch deutlich registrieren. Es ist zu vermuten, daß durch die Kombination von zwei sich gegenüberliegenden Strömungswandlern bei geeigneter Ausbildung und Anordnung eine Fehlerkurve erzielt werden kann, bei der sowohl die sonst übliche Überhöhung vermindert ist, und deren steiler Abfall in den Minusbereich relativ spät einsetzt.

Wie die Fehlerkurve in Fig. 4 zeigt, gelingt es nicht nur bei turbulenter Strömung im oberen Meßbereich MO ohne Schwierigkeit innerhalb der Fehlergrenzen G von +/- 2 % zu bleiben, sondern auch unterhalb der Trenngrenze QT bis zum Beginn des unteren Meßbereichs MU beim minimalen Durchfluß Qmin diese Fehlergrenze zu unterschreiten.

## Patentansprüche

1. Flügelradzähler zum Messen einer Flüssigkeitsmenge, mit einem Zählergehäuse (14), in das außer einem Werkbecher (17) für ein Zählwerk (18) ein Flügelradbecher (1) eingebaut ist, in dem sich ein das Zählwerk (18) antreibendes Flügelrad (16) befindet und in dessen Mantel mindestens ein auf die Paletten des Flügelrades (16) gerichteter, im Querschnitt vorzugsweise rechteckiger, sich von seiner Eintrittsöffnung zur Austrittsöffnung hin verjüngender Einlaßkanal (2) sowie mindestens ein Auslaßkanal (3) mit gegenüber dem Einlaßkanal (2) vergrößertem Querschnittzum Druchtritt der Flüssigkeit angeordnet sind und die Paletten durch die Drehung des Flügelrades (16) nacheinander in den Anströmbereich des Einlaßkanals (2) gelangen, und daß zur Linearisierung der Meßkurve oberhalb und/oder unterhalb des Flügelrads (16) Staurippen (9, 19) angeordnet sind, **dadurch gekennzeichnet, daß** innerhalb des Einlaßkanals (2) mindestens ein in den Flüssigkeitsstrom ragender Strömungswandler (31), der die Strömungsgeschwindigkeit eines Teils des Flüssigkeitsstroms vermindert, so angeordnet ist, **daß** das erzeugte Geschwindigkeitsprofil der auf die Palette wirkenden Teilströme durch Umlenkung von Teilströmen in unterschiedlichen radialen Abständen zur Drehache des Flügelrades Teildrehmomente erzeugt, die jeweils in ihrer Summe ein Drehmoment ergeben, das zu einer Drehzahl führt, die der jeweiligen Durchflußmenge in einem vorgegebenen Meßbereich nahezu proportional ist, und **daß** der durch den Strömungswandler (31) verursache Bremseffekt auf die Drehgeschwindigkeit des Flügelrades (16) durch eine entsprechende Verkleinerung der Austrittsöffnung des Einlaßkanals (2) und die hierdurch erzielte Erhöhung der Durchflußgeschwindigkeit kompensiert ist,
**daß** der Strömungswandler (31) als eine in den Flüssigkeitsstrom hineinragende Ablenkfläche ausgebildet ist, die kurz vor der Austrittsöffnung mit einem ersten Teil (4a) einer Seitenwand (4) des Einlaßkanals (2) eine Abrißkante (4b) bildet und zur Eintrittsöffnung hin bogenförmig in einen entsprechend zurückgesetzten und dadurch den Kanalquerschnitt vergrößernden zweiten Teil (4c) der Seitenwand (4) übergeht und **daß** die Ablenkfläche so innerhalb des Einlaßkanals (2) angeordnet ist, **daß** eine Ablenkung vorzugsweise laminarer Flüssigkeitsströme radial zur Drehachse und/oder von dieser weg erzielt wird, und **daß** die Abrißkante (4b) einer Anlenkfläche, die eine Ablenkung zur Drehachse des Flügelrades (16) hin bewirkt, um ca. 30 % der mittleren Kanallänge von der Austrittsöffnung entfernt ist und der Kanalquerschnitt im Bereich der Eintrittsöffnung durch das Zurücksetzen der Seitenwand (4c) um ca. 20 % vergrößert ist.

2. Flügelradzähler nach Anspruch 1, **dadurch gekennzeichnet, daß** mindestens eine sich mit ihrer Breitfläche in Strömungsrichtung erstrekkende Trennwand (32) so in den Einlaßkanal (2) eingefügt ist, **daß** sie mindestens zwei den Flüssigkeitsstrom in Teilströme aufteilende Teileinlaßkanäle (2a, 2b) bildet.

3. Flügelradzähler nach Anspruch 2, **dadurch gekennzeichnet, daß** eine sich mit ihrer Breitfläche axial und/oder radial erstreckende Trennwand zu einer Teilung des Einlaßkanals in mehrere Teileinlaßkanäle führt.

4. Flügelradzähler nach Anspruch 3, **dadurch gekennzeichnet, daß** mindestens einer der durch Einfügen einer oder mehrerer Trennwände entstandenen Teilkanäle eines Einlaßkanals (2) mit einer als Strömungswandler (31) wirkenden Ablenkfläche nach Anspruch 2 oder Anspruch 3 versehen ist.

5. Flügelradzähler nach einem der vorhergehenden Ansprüche, **dadurch gekennzeichnet, daß** mehrere, vorzugsweise eine gerade Zahl von Einlaßkanälen (2) in gleichen Abständen zueinander auf den Umfang des Flügelradbechers (1) verteilt sind und eine gleiche Zahl von Auslaßkanälen (3) in Vorwärtsdrehrichtung der Palette (16) tangential ausmündend, oberhalb der Einlaßkanäle angeordnet sind.

6. Flügelradzähler nach einem der vorhergehenden Ansprüche, **dadurch gekennzeichnet, daß** sich die oberhalb des Flügelrades (16) liegenden Staurippen (19) auf der unteren Außenseite des Werkbechers (17) befinden und die unterhalb des Flügelrades (16) liegenden Staurippen am Boden des Flügelradbechers (1) angeordnet sind.

7. Flügelradzähler nach einem der vorhergehenden Ansprüche, **dadurch gekennzeichnet, daß** die durch den Strömungswandler (31) entstehenden beiden Teile (4a, 4c) der jeweiligen Seitenwand (4) stufig parallel zueinander versetzt sind und somit die gleiche Richtung beibehalten.

8. Flügelradzähler nach einem der vorhergehenden Ansprüche, **dadurch gekennzeichnet, daß** die Verjüngung der Einlaßkanäle (2), vom Einfluß des Strömungswandlers (31) abgesehen, und der Auslaßkanäle jeweils zum Innenraum des Flügelradbechers (1) hin einer Neigung der Seitenwände (4) von ca. 7° zueinander entspricht.

9. Flügelradzähler nach einem der vorhergehenden Ansprüche, **dadurch gekennzeichnet, daß** der senkrecht zur Längsachse der Einlaßkanäle (2) im Bereich ihrer Ausflußöffnungen vorhandene Querschnitt (7) der Einlaßkanäle (2) gleich oder kleiner dem senkrechten Rechteckquerschnitt (8) der Auslaßkanäle (3) im Bereich ihrer Zufiußöffnungen ist und das Verhältnis von Höhe zur Breite an diesen beiden Stellen des Querschnittes etwa 3:1 beträgt.

## Claims

1. A turbine flowmeter for measuring fluid quantities, with a flowmeter housing (14) in which a vane scoop (1) is built-in in addition to a scoop (17) for a meter (18), in which vane scoop there is disposed a vane (16) for driving the meter (19) and in whose jacket there is disposed at least one inlet duct (2) which is directed against the pallets of the vane (16), is preferably rectangular in its cross section, and tapers from its inlet opening to its outlet opening, as well as at least one outlet duct (3) with a cross section which is enlarged as compared with the inlet duct (2) for allowing the passage of the fluid and the pallets to successively reach the flow zone of the inlet duct (2) by the rotation of the vane (16) and that retaining ribs (9, 19) are provided above and/or below the vane (16) for linearization of the measuring curve, **characterized in that** at least one flow converter (31) projecting into the fluid flow is disposed in the inlet conduit (2), which converter reduces the flow speed of a portion of the fluid flow and is disposed such that the produced speed profile of the partial streams acting on the pallets produces partial torques by the deflection of partial flows in different radial distances from the rotational axis of the vane, which partial torques lead in total to a torque leading to a rotational speed which is virtually proportional to the respective flow quantity in a predetermined measuring range and that the braking effect produced by the flow converter (31) on the rotational speed of the vane (16) is compensated by a respective reduction of the outlet opening of the inlet conduit (2) and the thus produced increase of the flow speed, that the flow converter (31) is arranged as a deflection surface projecting into the fluid flow which forms shortly before the outlet opening forms a flow break-off edge (4b) with a first part (4a) of a side wall (4) of the inlet duct (2) and converges into a second part (4c) of the side wall (4) in an arc-shaped manner towards the inlet opening, which second part is set back accordingly and thus enlarges the cross section of the duct, and that the deflection surface is disposed within the inlet conduit (2) in such a way that a deflection of preferably laminar fluid flows is achieved radially to the rotational axis and/or away from the same, and that the flow break-off edge (4b) of a deflection surface which produces a deflection towards the rotational axis of the vane (16) is distanced by approx. 30% of the mean duct length from the outlet opening and the cross section of the duct is enlarged in the zone of the inlet opening by setting back the side wall (4c) by approx. 20%.

2. A turbine flowmeter as claimed in claim 1, **characterized in that** at least one separating wall (32) extending with its broad side in the direction of flow is inserted in the inlet duct (2) in such way that it forms at least two partial inlet ducts (2a, 2b) dividing the fluid flow into partial flows.

3. A turbine flowmeter as claimed in claim 2, **characterized in that** a separating wall extending axially and/or radially with its broad surface leads to a division of the inlet duct into several partial inlet ducts.

4. A turbine flowmeter as claimed in claim 3, **characterized in that** at least one of the partial ducts of an inlet duct (2) which is produced by the insertion of one or several separating walls is provided with a deflection surface according to claim 2 or claim 3 which acts as a flow converter (31).

5. A turbine flowmeter as claimed in one of the preceding claims, **characterized in that** several inlet conduits (2), with preferably an even number thereof, are distributed at equal distances with respect to one another on the circumference of the vane scoop (1) and a similar number of outlet ducts (3) are disposed above the inlet ducts, which outlet ducts open out in a tangential manner in the forward rotational direction of the pallets (16).

6. A turbine flowmeter as claimed in one of the preceding claims, **characterized in that** the retaining ribs (19) disposed above the vane (16) are disposed on the lower outer side of the scoop (17) and the retaining ribs disposed below the vane (16) are disposed on the floor of the vane scoop (1).

7. A turbine flowmeter as claimed in one of the preceding claims, **characterized in that** the two parts (4a, 4c) of the respective side wall (4) which are produced by the flow converter (31) are offset with respect to one another in a stepped parallel way and thus maintain the same direction.

8. A turbine flowmeter as claimed in one of the preceding claims, **characterized in that** the tapering of the inlet ducts (2), apart from the influence of the flow converter (31), and the outlet ducts (3) each towards the inner chamber of the vane scoop (1) corresponds to an inclination of the side walls (4) of approx. 7° towards one another.

9. A turbine flowmeter as claimed in one of the preceding claims, **characterized in that** the cross section (7) of the inlet ducts (2) which is disposed perpendicular to the longitudinal axis of the inlet ducts (2) in the zone of their outlet openings is equal to or smaller than the perpendicular rectangular cross section (8) of the outlet ducts (3) in the zone of their inflow openings and the ratio of height to width at the two said locations of the cross section is approx. 3:1.

## Revendications

1. Compteur à turbine destiné à la mesure d'un débit de liquide, comportant un boîtier de compteur (14) à l'intérieur duquel est logé, outre un carter (17) recevant un mécanisme de comptage (18), une bâche (1) dans laquelle se trouve une roue de turbine (16) qui entraîne le mécanisme de comptage (18) et dans la paroi périphérique de laquelle sont aménagés au moins un canal d'entrée (2) qui est orienté en direction des aubes de la roue de turbine (16), présente une section de préférence rectangulaire et se rétrécit depuis son orifice d'entrée en direction de son orifice de sortie, ainsi qu'au moins un canal de sortie (3) de section supérieure à celle du canal d'entrée (2) pour le passage du liquide, les aubes étant amenées successivement par la rotation de la roue de turbine (16) dans la zone d'écoulement du canal d'entrée (2), et des nervures (9, 19) formant chicanes étant disposées en amont et/ou en aval de la roue de turbine (16) afin de linéariser la courbe de mesure, **caractérisé par** le fait qu'au moins un convertisseur d'écoulement (31) qui fait saillie dans le flux de liquide et abaisse la vitesse d'écoulement d'une partie du flux de liquide est disposé dans le canal d'entrée (2) de telle manière que le profil de vitesse généré des flux divisionnaires agissant sur l'aube produise, par déviation des flux divisionnaires à différentes distances radiales par rapport à l'axe de rotation de la roue de turbine, des couples partiels dont la somme donne un couple qui, dans une plage de mesure prédéterminée, engendre une vitesse de rotation sensiblement proportionnelle au débit, par le fait que l'effet de freinage exercé par le convertisseur d'écoulement (31) sur la roue de turbine (16) est compensé par une réduction correspondante de l'orifice de sortie du canal d'entrée (2) et par l'augmentation ainsi obtenue de la vitesse d'écoulement, par le fait que le convertisseur d'écoulement (31) est agencé sous la forme d'une surface déflectrice qui fait saillie dans le flux de liquide et qui, peu avant l'orifice de sortie, forme un bord de décollement (4b) avec une première partie (4a) d'une paroi latérale (4) du canal d'entrée (2) et, en direction de l'orifice d'entrée, se raccorde en formant un arc à une deuxième partie (4c) en retrait de la paroi latérale (4), élargissant ainsi la section du canal, par le fait que la surface directrice est disposée à l'intérieur du canal d'entrée (2) de manière à obtenir une déviation des écoulements de préférence laminaires radialement en direction de l'axe de rotation et/ou dans la direction éloignée de celui-ci, et par le fait que le bord de décollement (4b) d'une surface déflectrice provoquant une déviation en direction de l'axe de rotation de la roue de turbine (16) est disposé à une distance de l'orifice de sortie égale à environ 30 % de la longueur moyenne du canal et que la section du canal, dans la région de l'orifice d'entrée, est augmentée d'environ 20 % par le retrait de la paroi latérale (4c).

2. Compteur à turbine selon la revendication 1, **caractérisé par** le fait qu'au moins une cloison (32) dont le grand côté s'étend dans la direction d'écoulement est disposée dans le canal d'entrée (2) de telle manière qu'elle forme au moins deux canaux divisionnaires (2a, 2b) d'entrée qui divisent le flux de liquide en flux divisionnaires.

3. Compteur à turbine selon la revendication 2, **caractérisé par** le fait qu'une cloison dont le grand côté s'étend axialement et/ou radialement divise le canal d'entrée en plusieurs conduits divisionnaires d'entrée.

4. Compteur à turbine selon la revendication 3, **caractérisé par** le fait qu'au moins un des canaux divisionnaires d'entrée d'un canal d'entrée (2) obtenus par l'insertion d'une ou plusieurs cloisons est pourvu d'une surface déflectrice selon la revendication 2 ou la revendication 3 qui agit comme convertisseur d'écoulement.

5. Compteur à turbine selon l'une quelconque des revendications précédentes, **caractérisé par** le fait que plusieurs canaux d'entrée (2), de préférence en nombre pair, sont répartis à intervalles réguliers sur la circonférence de la bâche (1) est un nombre identique de canaux de sortie (3) débouchant dans le sens tangentiel dans le sens de rotation vers l'avant de la roue de turbine (16) sont disposés en amont des canaux d'entrée.

6. Compteur à turbine selon l'une quelconque des revendications précédentes, **caractérisé par** le fait que les nervures (19) situées au-dessus de la roue de turbine (16) se trouvent dans le bas de la face externe du carter (17) et les nervures situées en dessous de la roue de turbine (16) sont disposées dans le fond de la bâche (1).

7. Compteur à turbine selon l'une quelconque des revendications précédentes, **caractérisé par** le fait que les deux parties (4a, 4c) de chaque paroi latérale (4) produites par le convertisseur d'écoulement (31) sont décalées en gradins parallèlement l'une à l'autre et gardent donc la même direction.

8. Compteur à turbine selon l'une quelconque des revendications précédentes, **caractérisé par** le fait que le resserrement des canaux d'entrée (2), mis à part l'entrée du convertisseur d'écoulement (31), et des canaux de sortie vers l'intérieur de la bâche (1) correspond à une inclinaison des parois latérales (4) de 7° environ l'une vers l'autre.

9. Compteur à turbine selon l'une quelconque des revendications précédentes, **caractérisé par** le fait que la section (7) des canaux d'entrée (2) perpendiculaire à l'axe longitudinal des canaux d'entrée (2) au niveau de leurs ouvertures d'écoulement est égale ou inférieure à la section rectangulaire (8) perpendiculaire des canaux de sortie (3) au niveau de leurs ouvertures d'entrée et le rapport entre hauteur et largeur en ces deux endroits de la section est d'environ 3 pour 1.
